# EUROPEAN PATENT APPLICATION

(11) **EP 4 834 110 A1**
(43) Date of publication of application: **04.11.2026**
(21) Application number: 25382433.8
(22) Date of filing: 29.04.2025
(51) Int. Cl.: A22B 5/00, A22C 17/00, A22B 5/20

(54) **AUTOMATIC SYSTEM FOR TRANSVERSAL CUTTING OF A HALF CARCASS OF LIVESTOCK INTO ONE OR MORE CUTS AND CUTTING DEVICE TO BE USED ON SAID AUTOMATIC SYSTEM**

(71) Applicant: Frontmatec-Aira Slu, 08261 Cardona (ES)
(72) Inventor: JANE LOPEZ, Francisco Javier, 08261 Cardona (ES)
(74) Representative: Ponti & Partners, S.L.P

(57) **Abstract**

An automatic system for transversal cutting of a half carcass (2) of livestock into one or more primal cuts, the system comprising: at least an imaging device (6) configured for imaging a half carcass (2) of livestock; a cutting device (1a, 1b) carrying a cutting tool (5); and a controller operatively connected to said imaging device (6) and to said cutting device (1a, 1b), wherein said controller is configured to control the cutting device (1a, 1b), and wherein the cutting device (1a, 1b) is a robot-based device comprising a robotic arm (13) carrying the cutting tool (5), and in that the cutting device (1a, 1b) is configured and arranged to, under the control of the controller, angularly move the cutting tool (5) by pivoting it at least about a pivot axis (Z, Y, Z), to adopt a plurality of inclined positions with respect to the conveying path.

## Description

The present invention generally relates to an automatic system for transversal cutting of a half carcass of livestock into one or more cuts, for example, into one or more primal cuts. It also relates to a cutting device for transversal cutting of a half carcass of livestock into one or more cuts by means of the claimed automatic system.

### Background of the invention

The processing of pork carcasses is a critical step in the meat production industry. Traditionally, the cutting of pork carcasses into primal and sub-primal parts has been carried out manually by skilled butchers. While this method allows for precise cuts based on visual assessment and experience, it is labor-intensive, time-consuming, and subject to variability in quality and yield. Furthermore, the manual handling of carcasses presents ergonomic challenges and potential safety hazards for workers, particularly due to the repetitive nature of the tasks and the use of sharp tools.

In slaughterhouses, carcasses of livestock are typically split into two half carcasses through the spinal column along a median sagittal plane. After splitting, each half carcass of livestock is placed on a conveyor to undergo primal cutting, which consists of transversal cutting of the half carcass into several primal cuts such as fore-end (shoulder in pork), middle piece, and back-end (ham in pork).

Nowadays the primal cutting takes place in slaughterhouses by sawing the half carcass while being conveyed by the conveyor along a conveying path by means of mechanical systems having one or more cutting tools configured as static circular saws or static band saws. However, these mechanical systems have the drawbacks that require the operators to position manually the half carcass on the conveyor and do not adapt to anatomical differences between individual carcasses. As a result, they may produce suboptimal cuts, leading to material loss, reduced product quality, and inefficiencies in downstream processing.

In recent years, efforts have been made to automate the primal cutting process. Automatic systems have been developed to improve the quality of the primal cuts. One of those systems comprises an imaging device configured for imaging a half carcass of livestock while being conveyed by the conveyor along a conveying path. Said imaging device provides an intended cutting path for the primal cut that is indicated on the half carcass by means of a laser pointer. A cutting device carries a band saw and is configured and arranged to, under the control of a controller, move the band saw sideways in a direction perpendicular to the conveying path to adapt the cutting path of the band saw to the intended cutting path.

It has been found that existent automated systems such as the one disclosed in the previous paragraph still depend on external positioning or clamping mechanisms that must be manually adjusted for each half carcass. This introduces bottlenecks in processing speed and may also reintroduce ergonomic burdens that automation was intended to alleviate. Variability in carcass presentation (such as inconsistent orientation or deformation of the half carcass during transport) can also interfere with proper alignment in automated setups, further reducing reliability.

Moreover, the existent automated systems do not adequately account for natural variability in carcass morphology, including differences in size, shape, or anatomical structure. When deviations occur, cutting accuracy may be compromised, potentially resulting in the unintended inclusion of bone fragments, improper separation of meat portions, or unnecessary discard of usable material.

Additionally, in systems where sensing is implemented, the sensing modalities are often limited in resolution or coverage, and do not provide sufficient information to fully identify internal anatomical landmarks. This can reduce the precision of cut positioning, particularly in complex areas involving bone junctions or transitions between tissue types.

On the other hand, the need for different types of cuts is increasing, as slaughterhouses try to adapt to customer's demands, such as the demand for a pork primal cut that allows obtaining a back end (ham) that includes a portion of loin. However, existing automated systems do not allow tailoring the primal cut to current customer needs.

It is, therefore, necessary to provide an alternative to the state of the art which covers the gaps found therein, by the provision of an automated system for transversal cutting of a half carcass, which overcomes the above-mentioned shortcomings, and thus provides a system that can perform reliable primal cutting tailored to the customer's demands.

### Description of the invention

To that end, the present invention relates, in a first aspect, to an automatic system for transversal cutting of a half carcass of livestock into one or more cuts, preferably, one or more primal cuts, comprising;
- at least one imaging device configured for imaging a half carcass of livestock, preferably, for imaging a half carcass while said half carcass is conveyed by a conveyor along a conveying path;
- a cutting device carrying a cutting tool; and
- a controller operatively connected to said imaging device to receive one or more images of the imaged half carcass of livestock, and to said cutting device, wherein said controller is configured to control the cutting device, based on said one or more received images and on positional data representative of the movements of the conveyor, to perform a cut on the half carcass of livestock as the carcass of livestock is moved along said conveyor path,
wherein said cutting device is configured and arranged to, under the control of the controller, move said cutting tool sideways in a direction perpendicular to said conveying path to carry out said transversal cutting.

The automated system is characterized in that the cutting device is a robot-based device comprising a computer-controlled mechanical arm or a robotic arm carrying the cutting tool, and in that the cutting device is configured and arranged to, under the control of the controller, angularly move the cutting tool by pivoting it at least about a pivot axis, to adopt a plurality of inclined positions with respect to the conveying path.

In a second aspect, the present invention relates to a cutting device for transversal cutting of a half carcass of livestock into one or more cuts, preferably, into one or more primal cuts, by means of the claimed automatic system, wherein said cutting device is a robot-based device comprising a computer-controlled mechanical arm or a robotic arm carrying a cutting tool, and wherein said robot-based device is configured and arranged to, under the control of the controller of the automatic system, angularly move the cutting tool by pivoting it at least about a pivot axis, to adopt a plurality of inclined positions with respect to the conveying path.

Thanks to the claimed features, the present invention provides an automated system and a cutting device to be used on said automated system for transversal cutting of a half carcass, that can perform one or more reliable cuts.

Indeed, in the present invention the cutting device is a robot-based device that allows, under the control of a controller, angularly move the cutting tool for said tool to adopt a plurality of inclined positions with respect to the conveying path. In this way, the automated system allows variability in carcass presentation (such as inconsistent orientation of the half carcass on the conveyor) to not interfere with primal cutting without the need for external positioning of the half carcass on the conveyor. In fact, the claimed system allows the cutting tool to acquire an inclined position with respect to the conveyor path so that the cutting tool performs an optimal cutting path even though the half carcass is not positioned perpendicular to the forward direction of the conveyor (the conveyor path).

In addition, it has been found that the claimed system allows tailoring primal cutting to the customer's demands without losing processing speed. For example, the claimed system allows to perform a primal cut defined by a cutting path including sections of different directions; a first lineal inclined section running between 7^{th} vertebrae and 8^{th} vertebrae and a second circular section running between 4^{th} and 5^{th} rib. Said non-linear cuts allow optimizing the raw material value by leaving meat or bones where the value is the best.

The claimed system adequately account for natural variability in carcass morphology, including differences in size, shape, or anatomical structure without compromising cutting accuracy and ensuring precision of cut positioning, particularly in complex areas involving bone junctions or transitions between tissue types. In fact, the claimed system and the claimed cutting device have the ability, as compared to the systems of the prior art, to make curved or non-linear cuts without exerting any pressure on the cutting tool, since the claimed device pivots so that the cutting tool is positioned in the same direction as the shape of the cut. This has been found very relevant to prevent the cutting tool from breaking and to avoid the actual cutting path deviating from the intended cutting path.

For one embodiment, the cutting device is configured and arranged to, under the control of the controller, angularly move the cutting tool by pivoting it at least about a pivot axis, wherein said pivot axis is a first pivot axis (z), and wherein the cutting device is also configured and arranged to, under the control of the controller, angularly move the cutting tool by pivoting it about a second pivot axis (y) orthogonal to said first pivot axis (z), to adopt a further plurality of inclined positions with respect to the conveying path.

Preferably, one of said first and second pivot axes is perpendicular to said conveying path. For example, the first pivot axis is the Z axis of the Cartesian coordinate system, and the second pivot axis is the Y axis of the same Cartesian coordinate system, wherein the Y axis is mutually perpendicular to the Z axis and X axis. According to this embodiment, the conveying path may define the Y axis.

The cutting tool is one selected from a band saw, a band knife, a cutting blade, an oscillating knife or an ultrasonic knife. Preferably, the cutting tool is a band saw since the band saw is widely accepted for higher speed when processing meat.

For one embodiment, the automated system further comprises the conveyor that conveys the half carcasses, wherein the conveyor comprises at least two conveyors aligned and placed with a transversal gap between them, and wherein the cutting device is configured and arranged to, under the control of the controller, place the cutting tool in said transversal gap and, while being placed in the gap, move the cutting tool sideways in the direction perpendicular to the conveying path and according to said angular movements.

Optionally, for some embodiments, the conveyor includes two pairs of conveyors and a central conveyor. Each pair of conveyors is arranged on one side of the central conveyor and has a respective transversal gap between conveyors for the cutting tool of a respective cutting device being placed in the gap.

This embodiment has the advantage that may help to limit the rocking movement of the half carcass and provide better conveying.

The conveyor may be a roller, a conveyor belt or holding means where the half carcass is conveyed by holding or gripping it. Preferably, the conveyor comprises two conveyor belts or rollers.

Advantageously, the transversal gap between the two conveyors is configured for allowing the cutting device to angularly move the cutting tool by pivoting it about a Z-axis and/or a Y-axis and/or, preferably, about a X-axis.

For the embodiment wherein the cutting tool is a band saw, the transversal gap is configured for allowing the cutting device to angularly move the band saw by pivoting it about a Z-axis and/or a Y-axis an angle equal or less than 35°. Advantageously, further configured for allowing the cutting device to angularly move the band saw by pivoting it about a X-axis an angle equal or less than 10°, preferably, equal or less than 5 °. For example, the transversal gap has a width between 10 mm and 35 mm, preferably, a width between 15 mm and 30 mm.

For one embodiment, the cutting device is configured and arranged, under the control of the controller, to perform said transversal cutting of a half carcass of livestock according to a plurality of different cutting paths.

According to this embodiment, the controller is configured to;
- receive information of a predetermined cut to be performed to the half carcass according to a user choice,
- calculate X, Y and Z coordinates of a cutting path of the cutting tool on the imaged half carcass of livestock based on said predetermined cut to be performed,
- calculate the respective pivoting angles of the cutting tool about the X-axis and/or about the Y-axis and/or about the Z-axis, for said cutting tool to follow the predetermined cutting path, and
- control the computer-controlled mechanical arm or robotic arm to perform the predetermined primal cut according to said calculated X, Y, Z coordinates of the cutting path and to said pivoting angles while the carcass of livestock is moved along the conveyor path.

Preferably, the controller receives information of positional data of the half-carcass on the conveyor by means of an encoder which provides information of the movement of the conveyor and thus, positional data of the half-carcass.

Alternative positioning systems to the encoder such as LIDAR systems or ultrasound or vision-based systems can be used for the controller to receive information of positional data of the half-carcass.

For one embodiment, the cutting device comprises a cutting head removably attached to the computer-controlled mechanical arm or the robotic arm, wherein said cutting head carries the cutting tool.

In this way, replacement of a worn or broken cutting tool is possible by automatically and quickly replacing the cutting head of the cutting device or by replacing only the cutting tool, for example a band saw, without replacing the cutting head.

For one embodiment, the cutting tool is a band saw mounted and arranged on the cutting head to be able to provide a cutting path parallel to the conveying path.

According to this embodiment that uses a band saw, the cutting head comprises a frame provided with at least two pulleys, preferably, with at least three pulleys, whereto the band saw is mounted, and actuating means (e.g. a motor) for actuating movement of the band saw through at least one of said pulleys (e.g. a driving pulley). Another one of the pulleys may act as idler pulley to help tensioning the band saw.

The embodiment with at least three pulleys has been found that improves the control of the cutting device, so that said cutting device more efficiently and precisely pivot the cutting tool to adopt the plurality of inclined positions with respect to the conveying path.

Advantageously, the cutting head includes guiding means for the band saw.

Again advantageously, the cutting head comprises said frame configured with a recess surrounded by said at least two, or at least three, pulleys for receiving an end of the half-carcass protruding from the conveyor and/or an end of one of said two conveyors when the cutting tool is working placed on the transversal gap.

For one embodiment, the automated system comprises at least two of said cutting device, arranged at opposite sides of the conveyor to perform at least two cuts, preferably, at least two primal cuts, on the same half carcass of livestock, said half carcass being placed on the conveyor transversally to the conveying path.

Optionally, the cutting devices need not be arranged one in front of other but instead they may be arranged at different positions along the line conveyor.

Preferably, said cutting devices are configured and arranged to, under the control of the controller, place the respective cutting tools in the transversal gap between conveyors and, while both cutting tools are placed in the gap, move the cutting tools to simultaneously perform two primal cuts on the same half carcass of livestock.

This embodiment has the advantage that significantly increases the yield of primal cutting process in slaughterhouses because the cuts are done simultaneously in the same working station.

According to the embodiment that includes two cutting devices, the cutting head of each of the cutting devices comprises the frame with said recess adapted for receiving one of the opposite ends of the same half-carcass and/or one of the ends of said two conveyors while the respective cutting tools are working placed on the transversal gap.

Preferably, the at least one imaging device comprises one or more vision-based devices, for example, two different vision-based devices, each of which provides information to a different cutting device.

Advantageously, for one embodiment, said one or more vision-based devices comprise a camera configured and arranged to provide image data features of the surface of the half carcass, a depth camera configured and arranged to provide depth data features of the half carcass, and processing and control means configured to generate an imaged half carcass of livestock including a 3D model based on the image and depth data features provided by both cameras.

Alternatively, or in combination, said one or more vision-based devices may include equipment comprising technologies such as X-ray based scan, computed tomography, fluoroscopy, radiography, ultrasound, magnetic resonance, LIDAR and 3D laser triangulation.

In the present invention;

The term "conveying path" should be understood the forward direction of the conveyor conveying the half carcass. For example, the forward direction of the conveyed path along the Y axis when the X axis is in the direction of the plane of a conveyor belt or roller holding or conveying the half carcass.

The term "primal cutting" should preferably be understood transversal cutting of a half carcass, advantageously, transversal cutting of a half carcass into one or more primal cuts. For example, primal cutting in pork is understood to allow obtaining three separate parts: a shoulder, a middle piece, and/or a ham of pork.

By robotic arm shall be understood a robotic arm or a computer-controlled mechanical arm, preferably, a computer-controlled arm with at least six degrees of freedom of movement.

In the claimed automated system, the controller comprises, for an embodiment, at least one processor and operatively connected thereto, data storage unit(s) and electric and electronic circuitry, and may include input/output user interfaces, and, for an implementation of that embodiment, the processor is adapted to process an algorithm used to process the received images and positional data, or data representative thereof, determine the cutting path, including its coordinates and movements of the cutting tool(s) (sideways and pivoting movements, including its tilting angles), and generate appropriate output electrical signals to drive electro-mechanical actuator(s) in charge of performing those movements of the cutting tool(s).

For some embodiments, those electromechanical actuator(s) also form part of the controller.

For some embodiments, the controller comprises at least two controllers.

For some embodiments, the controller is located in the imaging device and/or in the robot-based device(s) and/or in a further local or remote computing device.

The at least one processor may be implemented as one or more microprocessors, microcomputers, microcontrollers, digital signal processors, central processing units, state machines, logic circuitries, and/or any devices that manipulate signals based on operational instructions. Among other capabilities, the at least one processor is configured to fetch and execute computer-readable instructions stored in the data storage unit(s).

Different computing entities can be used, according to different embodiments, for implementing the processing capabilities of the controller, whether including local and/or remote computing entities, communicated through corresponding communication links (wired or wirelessly), for distributed or non-distributed computing.

The controller may be implemented in distributed computing environments where certain tasks are performed by remote processing devices that are linked through a communications network. In a distributed computing environment, program modules can be located in both local and remote memory storage devices

### Brief description of the drawings

The previous and other advantages and features will be more fully understood from the following detailed description of embodiments, with reference to the attached drawings, which must be considered in an illustrative and non-limiting manner, in which in detail:

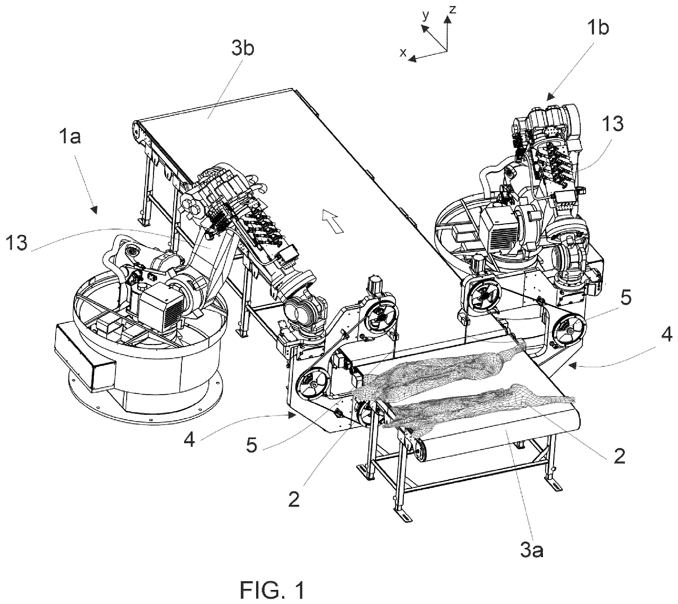

Figure 1 shows a schematically perspective view of an embodiment of the automated system for transversal cutting wherein two cutting devices are arranged at opposite sides of a conveyor to perform two primal cuts on the same half carcass of livestock. The cutting devices are robot-based devices comprising respective robotic arms having respective cutting tools each configured as a band saw. These cutting tools are placed in a transversal gap between two aligned conveyors. For the sake of clarity, this figure does not show the imaging device.

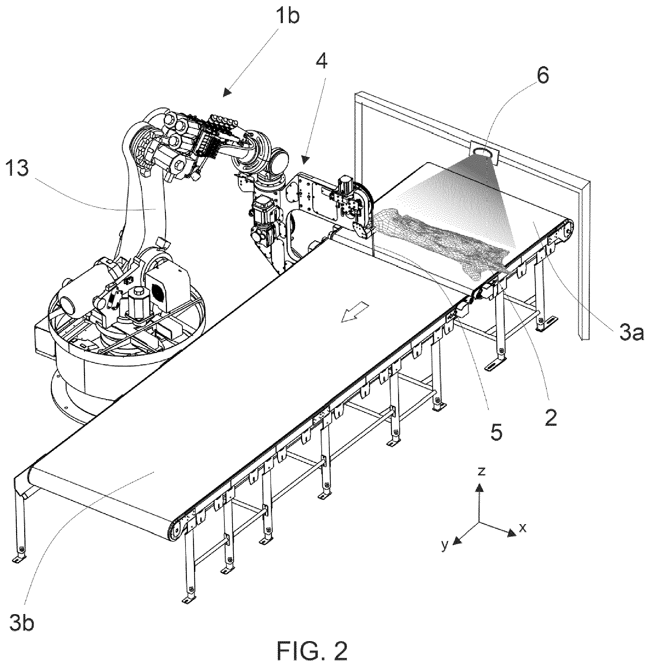

Figure 2 shows a schematically perspective view of an embodiment of the automated system similar to that of Figure 1 wherein only a cutting device is provided at one side of the conveyor. This figure also shows an imaging device that is a vision-based device configured and arranged for imaging an incoming half carcass of livestock while being conveyed by the conveyor along a conveying path.

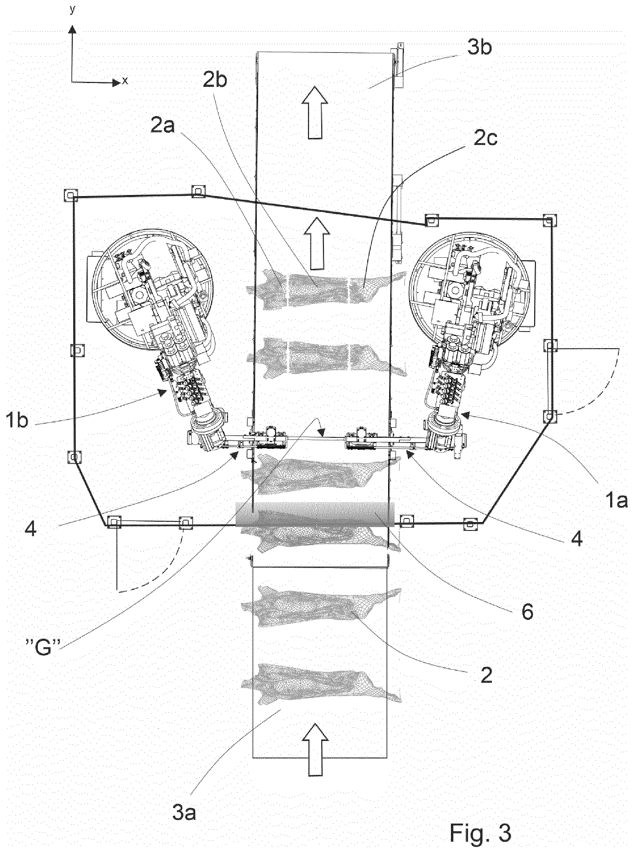

Figure 3 is a plant view schematically representing an embodiment of an automated system similar to that of Figure 1. As it is shown, several half carcasses of pork have been processed for primal cutting while being conveyed on the conveyor arranged transversally to the conveyed path of the conveyor.

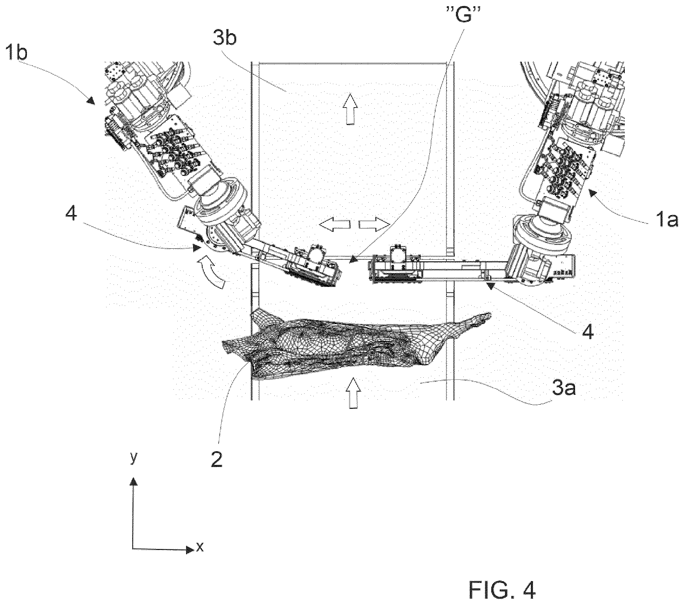

Figure 4 is a detailed plant view of the embodiment of the automated system of Figure 1 wherein one of the cutting devices has moved the cutting tool by pivoting it about a Z axis an angle less than 35°, preferably, an angle less than 30°, to perform a cutting path inclined with respect the conveying path of the conveyor.

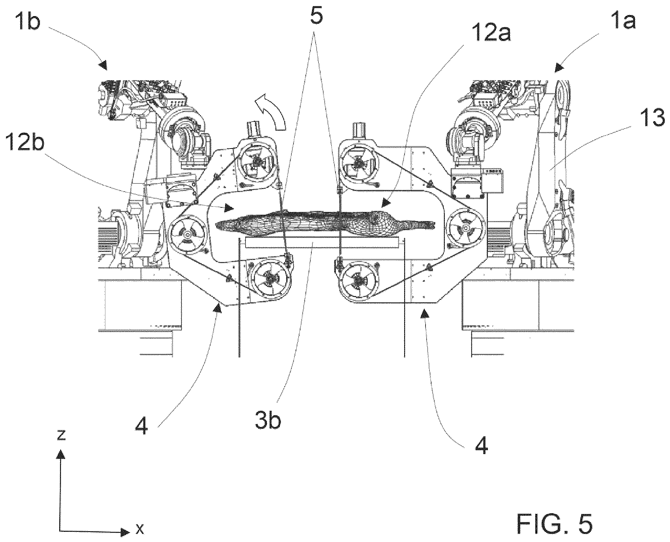

Figure 5 is a detailed side view of the embodiment of the automated system of Figure 1 wherein one of the cutting devices has moved the cutting tool by pivoting it about an Y axis an angle less than 35°, preferably, an angle less than 30°, to perform a cutting path inclined with respect the conveying path of the conveyor (when seeing the cutting path in a plant view).

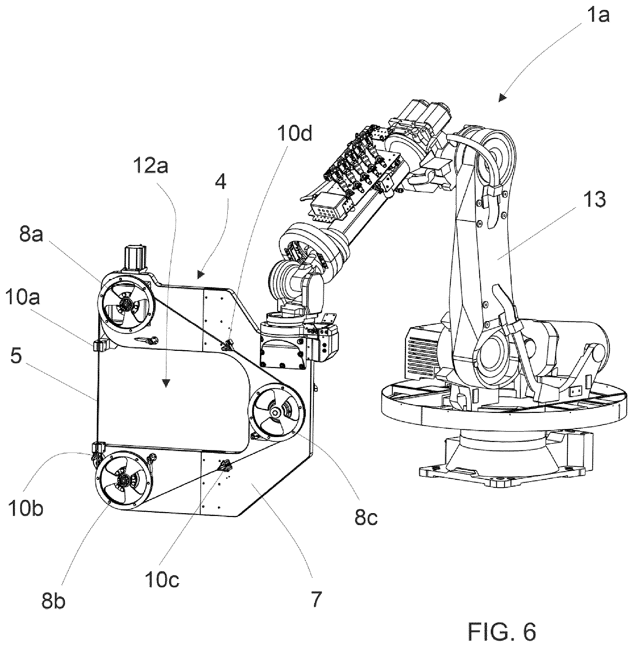

Figure 6 is a perspective view of one of the cutting devices of the embodiment of Figure 1. This figure shows a cutting head removably attached to the robotic arm of the robot-based device. This cutting head carries a cutting tool configured as a band saw.

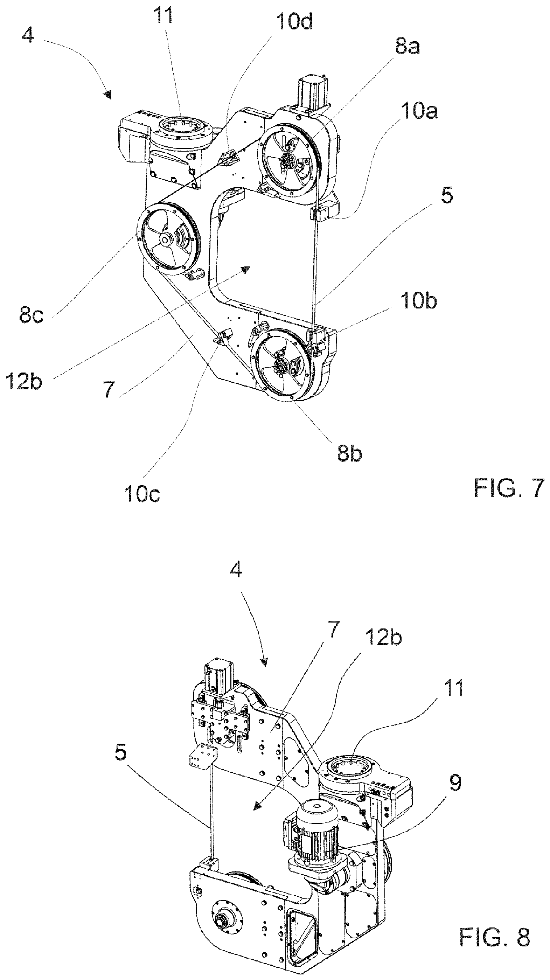

Figures 7 and 8 are front and rear perspective views of a cutting head similar to that of Figure 6. Each of the cutting heads include a frame provided with three pulleys whereto the band saw is mounted and a motor for actuating movement of the band saw by means of one of the pulleys.

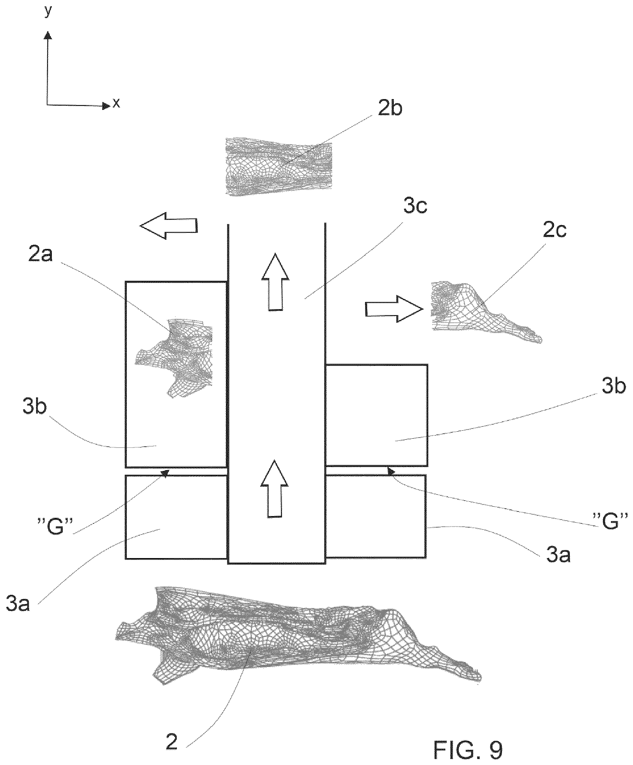

Figure 9 is a schematic plant view of an alternative embodiment of the automated system wherein the conveyor comprises two pair of conveyors and a central conveyor. Each pair of conveyors is arranged aligned with a transversal gap between them for a cutting device to position its respective cutting tool.

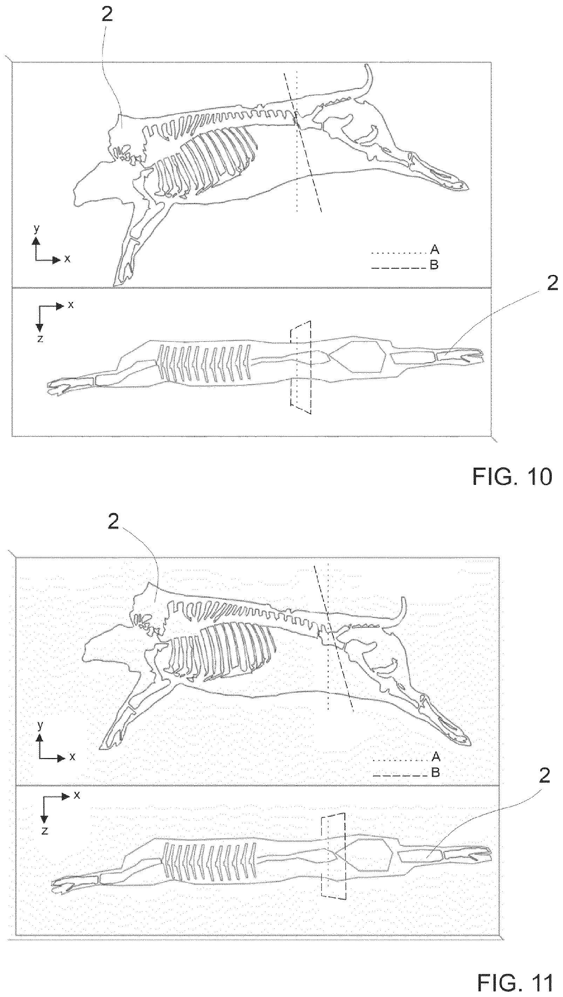

Figures 10 to 17 are schematic plant views and side views of half carcasses of pork wherein lines A represent cutting paths performed with a prior art automated system and lines B represent new cutting paths performed with the claimed automated system.

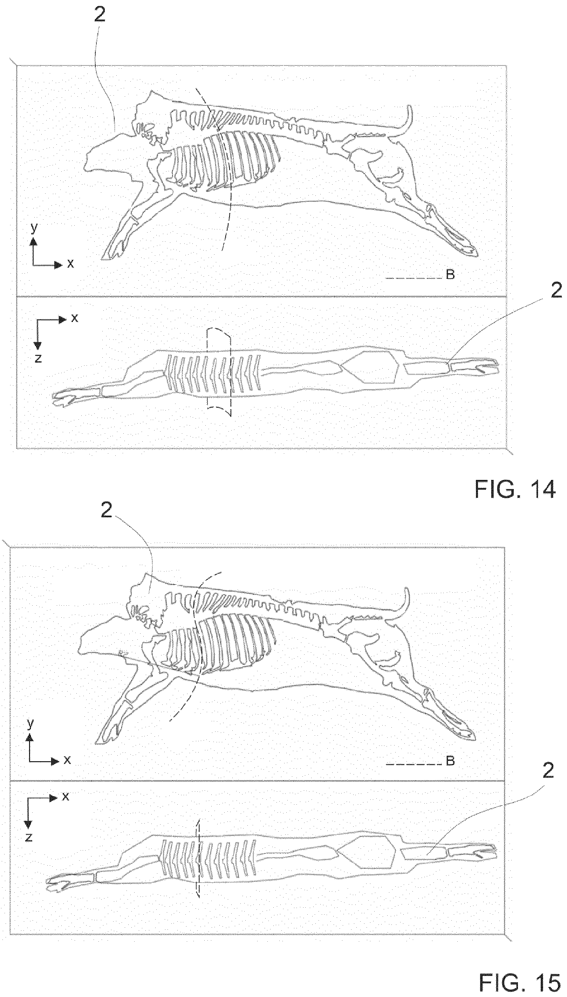

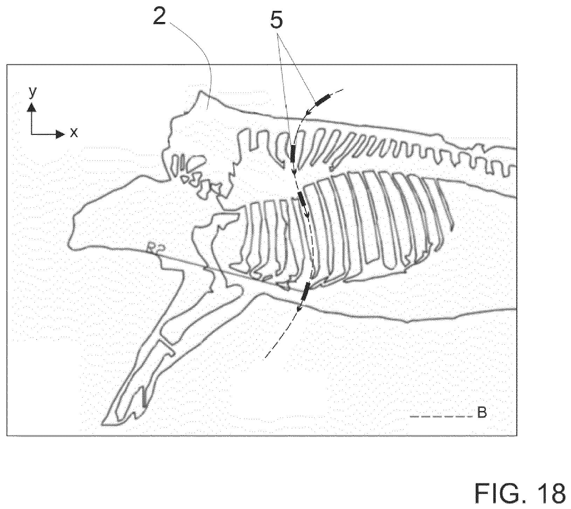

Figure 18 is a detailed plan view of the curved cutting path of Figure 15 in which the cutting tool has been schematically depicted, and the direction acquired by the cutting tool, which is the same direction as the cutting shape, has been indicated by arrows.

### Description of preferred embodiments

Following is a description of the claimed invention with reference to drawings of figures 1 to 18 representing embodiments of the claimed automated system and claimed cutting device 1 to be used on said system, wherein transversal cutting is performed on a half carcass 2 while said half carcass 2 is conveyed by a conveyor 3 along a conveying path.

In the disclosed embodiments, the cutting device 1a, 1b is a robot-based device comprising a robotic arm 13 carrying a cutting head 4 removably attached to the robotic arm 13. The cutting head 4 includes a band saw that acts as a cutting tool 5 and is mounted and arranged on the cutting head 4 to be able to transversally cut a half carcass 2 of livestock according to a plurality of different cutting paths, which may be cutting paths B inclined with respect to the conveying path.

To be able to carry out an inclined cutting path B the robot-based device is configured and arranged to, under the control of a controller (not shown) of the automated system, angularly move the cutting tool 5 by pivoting it at least about a pivot axis, for example, about a first pivot Z axis and/or about a second pivot Y axis, which is orthogonal to the first pivot Z axis.

Figure 4 shows a detailed plant view of an embodiment of the claimed automated system including two cutting devices 1a, 1b arranged at opposite sides of the conveyor 3 to perform two primal cuts on the same half carcass 2. In this figure 4, it is shown one 1a of the two cutting devices 1a, 1b after having angularly moved the cutting tool 5 by pivoting it about the Z axis an angle less than 35°, preferably, an angle less than 30°, to perform one of said cutting paths inclined with respect the conveying path of the conveyor 3.

Figure 5 shows a detailed side view of the same embodiment of figure 4 wherein, in this case, one 1a of the two cutting devices 1a, 1b has moved the cutting tool 5 by pivoting it about the Y axis an angle less than 35°, preferably, an angle less than 30°, to perform one of said cutting paths inclined with respect the conveying path of the conveyor 3.

The automated system further comprises at least one imaging device 6, for example a vision-based imaging device 6, configured for imaging the half carcass 2 while being conveyed by the conveyor 3 along the conveyor path. It also comprises the mentioned controller (not shown) operatively connected to said imaging device 6 to receive one or more images of the imaged half carcass 2 of livestock. The same controller (not shown) is operatively connected to the cutting devices 1a, 1b and configured to control said cutting devices 1a, 1b, based on the one or more received images and on positional data representative of the movements of the conveyor 3, to perform primal cuts on the same half carcass 2 according to predetermined cutting paths

In the disclosed embodiments of figures 1 to 5, the conveyor 3 includes two conveyors 3a, 3b (e.g. conveyor belts) aligned and placed with a transversal gap G between them. However, for other embodiments as depicted in Figure 9, the conveyor 3 includes two pairs of conveyors 3a, 3b and a central conveyor 3c. Each pair of conveyors is arranged on one side of the central conveyor 3c with its respective transverse gap G for placing therein the cutting tool of a respective cutting device (not shown in this figure 9).

As it is shown in Figures 1 to 5, each of the claimed cutting devices 1a, 1b is configured and arranged to, under the control of the controller (not shown) place the cutting tool 5 in the transversal gap G and, while being placed in the gap G, move the cutting tool 5 sideways in a direction perpendicular to the conveying path and according to angular movements.

The transversal gap G is configured with a dimension to allow the cutting device 1a, 1b to angularly move the cutting tool 5 within the gap. In the disclosed embodiments, the transversal gap G has a width between conveyors 3a, 3b of 25 mm.

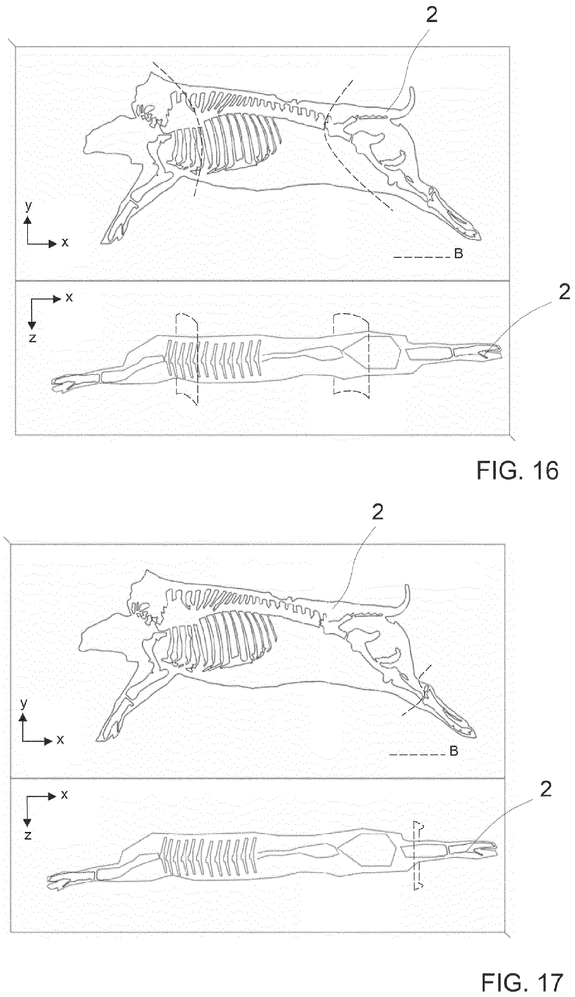

Figure 2 shows a schematically perspective view of an embodiment of the automated system wherein only one cutting device 1b is provided at one side of the conveyor 3 to perform a cut on a back-end portion of the half carcass 2. This cut may be a primal cut or a non-primal cut. A non-primal cut may be for example, the cut performed according to the cutting path shown in figure 17. Figure 2 also shows the imaging device 6 that, in this embodiment, is a vision-based device configured and arranged for imaging the incoming half carcass 2 of livestock while being conveyed by the conveyor 3 along the conveying path.

For the embodiments including two cutting devices 1a, 1b, transversal cutting or primal cutting of the half carcass 2 can take place simultaneously while the respective cutting tools 5 are placed in the gap G, so that said cutting tools 5 simultaneously perform two primal cuts on the same half carcass 2 of livestock while the half carcass 2 is being conveyed on the conveyors 3a, 3b. See figure 3 in which two half carcasses 2 of pork has been depicted after being processed by primal cutting to obtain three separate parts: a shoulder 2a, a middle piece 2b, and a ham 2c of pork.

Regarding the cutting head 4 of the claimed cutting device 1a, 1b, for the disclosed embodiments, the cutting head 4 includes an anchor base 11 for said cutting head 4 to be removably attached to the robotic arm 3, and a frame 7 provided with three pulleys 8a, 8b, 8c whereto the band saw is mounted. As it can be seen in figures 6 to 8, the frame 7 further includes actuating means 9 (e.g. a motor) for actuating movement of the band saw through one of said pulleys 8a, 8b, 8c, which is the driving pulley 8a, and guiding means 10a, 10b, 10c, 10d for guiding movement of the band saw. Moreover, the frame 7 is configured with a recess 12a, 12b, surrounded by the three pulleys 8a, 8b, 8c, for receiving an end of the half-carcass 2 protruding from the conveyor and/or an end of one of said two conveyors 3a, 3b, when the band saw is working placed on the transversal gap G.

For the embodiment that includes two cutting devices 1a, 1b arranged on the opposite sides of the conveyor 3, the cutting head 4 of each of the cutting devices 1a, 1b comprises the frame 7 with said recess 12a, 12b adapted for receiving one of the opposite ends of the same half-carcass and/or one of the ends of said two conveyors while the respective cutting tools are working placed on the transversal gap G. As it can be seen in figures 1 or 5, the recess 12a, 12b of the frame 7 of the cutting head 4 of each of the cutting devices 1a, 1b, may have different dimensions to adapt to a respective opposite end of the half carcass 2 protruding from the conveyor 3 when arranged substantially transversally on said conveyor 3.

For the disclosed embodiments, the claimed automated system includes a controller (not shown) operatively connected to the imaging device 6 and the cutting devices 1a, 1b, wherein said controller is configured to;
- receive information of a predetermined cut to be performed to the half carcass 2 according to a user choice,
- calculate X, Y and Z coordinates of a cutting path of the cutting tool 5 on the imaged half carcass 2 of livestock based on said predetermined cut to be performed,
- calculate the respective pivoting angles of the cutting tool 5 about the X-axis and/or about the Y-axis and/or about the Z-axis, for said cutting tool 5 to follow the predetermined cutting path, and
- control the computer-controlled mechanical arm or robotic arm 3 to perform the predetermined cut according to said calculated X, Y, Z coordinates of the cutting path and to the pivoting angles while the half carcass 2 of livestock is moved along the conveyor path.

The same controller receives information of positional data of the half-carcass 2 on the conveyor 3 by means of an encoder (not shown) which provides information of the movement of the conveyor 3a, 3b and thus, positional data of the half-carcass 2.

As previously disclosed, the claimed system allows primal cutting to be optimized for maximum performance without the need for complex and laborious external positioning of the half carcass 2.

Indeed, the cutting tool 5 allows performing an optimal cutting path without deviations even though the half carcass 2 is not positioned perpendicular to the forward direction of the conveyor (the conveyor path). Figure 10 represents the situation wherein the half carcass 2 has been deposited inconsistently oriented on the conveyor. In the prior art, an operator must manually move the half carcass 2 to place it substantially perpendicular to the conveyor path before the prior art automated system carries out the cutting path for said cutting path to be an optimal cutting path. In the present invention, the cutting device 1a, 1b is a robot-based device configured and arranged to, under the control of the controller, angularly move the cutting tool 5 for said cutting tool 5 to perform an optimal cutting path (see, line B) according to calculated X, Y, Z coordinates and respective pivoting angles of the cutting tool 5 about at least a pivot axis (Y-axis and/or, Z-axis and/or X-axis).

The claimed system also makes it possible to adapt the primal cut to the customer's demands without losing processing speed. Figures 11 to 16 explained below represent different ways of processing primal cutting with the automated system and cutting device of the present invention. Figure 17 represents an alternative way of performing cutting, which is different from primal cutting, with the claimed automated system and cutting device.

Figure 11 represents a cutting path (line B) realized with the claimed system by pivoting the cutting tool 5 around a Z-axis an angle of less than 35°. Said cutting path (line B) is inclined with respect to the conveyor path, or with respect to a cutting path (line A) realized with a prior art system, to obtain a primal cut (ham) including a fillet portion according to the user's choice.

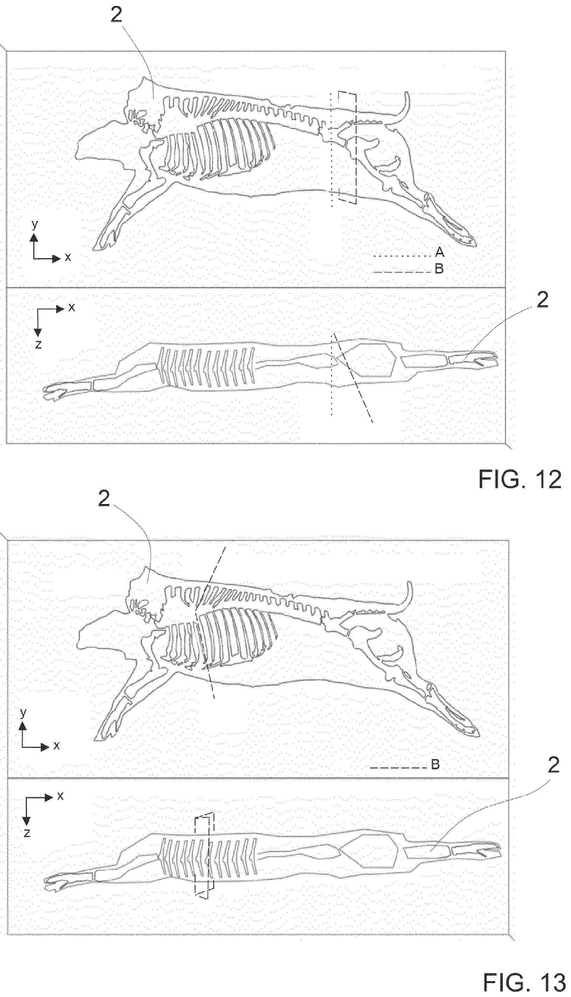

Figure 12 represents a cutting path (line B) realized with the claimed system by pivoting the cutting tool 5 around a Y-axis an angle of less than 35°. Said cutting path (line B) is inclined with respect to a cutting path (line A) realized with a prior art system, to obtain a primal cut (ham) slanting in depth so that it includes less meat of the underside of the ham according to the user's choice.

Figure 13 represents a cutting path (line B) realized with the claimed system by pivoting the cutting tool 5 around the Z axis for said cutting path to include two sections of different directions according to a predetermined user's choice.

Figures 14 to 16 represent two different cutting paths (line B) realized with the claimed system including circular sections according to two different user's choices.

The cutting paths (lines B) represented in figures 12 to 16 are useful to avoid cutting vertebrae or ribs when performing primal cutting without losing processing speed and without the need for manually processing. Indeed, with the claimed system, the speed of the conveyors 3a, 3b is maintained at a higher range between 600 to 700 pork per hour without said speed preventing the system from angularly moving the cutting tool 5 within the transversal gap G.

As stated in the description of the invention, the claimed system and the claimed cutting device have the ability, as compared to the systems of the prior art, to perform curved or non-linear cuts without exerting any pressure on the cutting tool 5.

Indeed, in the prior art systems, the cutting tool 5 may be moved sideways in a direction perpendicular to the conveying path to follow an intended cut path. However, it has been found this movement causes the cutting tool 5 laterally push the meat, which frequently results in the cutting tool breaking, or in the actual cutting path deviating from the intended cutting path.

In the claimed system, the cutting device pivots so that the cutting tool 5 is positioned in the same direction as the shape of the cut (see figure 18). This has been found very relevant to eliminate deviations from the intended cutting path and to prevent the cutting tool from breaking.

Summarizing, the present invention claimed system adequately account for natural variability in carcass morphology, including differences in size, shape, or anatomical structure without compromising cutting accuracy and ensuring precision of cut positioning, particularly in complex areas involving bone junctions or transitions between tissue types.

See, list of numerical references below.

### List of references;

1a, 1b cutting devices
2 half carcass
2a shoulder
2b middle piece
2c ham
3a, 3b, 3c conveyors
4 cutting head
5 cutting tool
6 imaging device
7 frame
8a, 8b, 8c pulleys
9 actuating means (motor)
10a, 10b, 10c, 10d guiding means
11 anchor base
12a, 12b recess of the frame
13 robotic arm
G transversal gap
A cutting path performed with a prior art automated system
B cutting path performed with the claimed automated system.

A person skilled in the art could introduce changes and modifications in the embodiments described without departing from the scope of the invention as it is defined in the attached claims.

## Claims

1. An automatic system for transversal cutting of a half carcass (2) of livestock into one or more primal cuts, the system comprising:
- at least an imaging device (6) configured for imaging a half carcass (2) of livestock;
- a cutting device (1a, 1b) carrying a cutting tool (5); and
- a controller operatively connected to said imaging device (6) to receive one or more images of the imaged half carcass (2) of livestock, and to said cutting device (1a, 1b), wherein said controller is configured to control the cutting device (1a, 1b), based on said one or more received images and on positional data representative of the movements of a conveyor (3), to perform a cut on the half carcass (2) of livestock while said carcass (2) is conveyed by said conveyor (3) along a conveyor path,
wherein said cutting device (1a, 1b) is configured and arranged to, under the control of the controller, move said cutting tool (5) sideways in a direction perpendicular to said conveying path to carry out said transversal cutting;
**characterized in that** the cutting device (1a, 1b) is a robot-based device comprising a computer-controlled mechanical arm or a robotic arm (13) carrying the cutting tool (5), and **in that** the cutting device (1a, 1b) is configured and arranged to, under the control of the controller, angularly move the cutting tool (5) by pivoting it at least about a pivot axis (Z, Y, Z), to adopt a plurality of inclined positions with respect to the conveying path.

2. The automatic system according to claim 1, wherein said pivot axis is a first pivot axis (Z), and wherein the cutting device (1a, 1b) is configured and arranged to, under the control of the controller, angularly move the cutting tool (5) by pivoting it about a second pivot axis (Y) orthogonal to said first pivot axis (Z), to adopt a further plurality of inclined positions with respect to the conveying path.

3. The automatic system according to claim 2, wherein one of said first (Z) and second (Y) pivot axes is perpendicular to said conveying path.

4. The automatic system according to any of the previous claims, further comprising said conveyor (3), wherein the conveyor (3) comprises at least two conveyors (3a, 3b) aligned and placed with a transversal gap (G) between them, and wherein the cutting device (1a, 1b) is configured and arranged to, under the control of the controller, place the cutting tool (5) in said transversal gap (G) and, while being placed in the gap (G), move the cutting tool (5) sideways in said direction perpendicular to the conveying path and according to said angular movements.

5. The automatic systema according to any of claims 1 to 4, wherein the transversal gap (G) between the at least two conveyors (3a, 3b) is configured to allow the cutting device (1a, 1b) to angularly move the cutting tool (5) by pivoting it at least about a pivot axis, wherein said pivot axis is selected from a Y-axis and/or a X-axis and/or a Z-axis.

6. The automatic system according to any of the previous claims, wherein the cutting device (1a, 1b) is configured and arranged, under the control of the controller, to perform said transversal cutting of a half carcass (2) of livestock according to a plurality of different cutting paths (B).

7. The automatic system according to any of the previous claims, wherein the cutting device (1a, 1b) comprises a cutting head (4) removably attached to the computer-controlled mechanical arm or the robotic arm (13), said cutting head (4) carrying the cutting tool (5).

8. The automatic system according to claim 7, wherein the cutting tool (5) is a band saw mounted and arranged on the cutting head (4) to be able to provide a cutting path parallel to the conveying path.

9. The automatic system according to claims 7 and 8, wherein the cutting head (4) comprises a frame ()7) provided with at least two pulleys (8a, 8b, 8c) whereto the band saw is mounted, and actuating means for actuating movement of the band saw through at least one of said pulleys (8a, 8b, 8c).

10. The automatic system according to any of the previous claims, comprising at least two of said cutting device (1a, 1b), arranged at opposite sides of the conveyor (3) to perform two cuts on the same half carcass (2) of livestock, said half carcass (2) being placed on the conveyor (3) transversally to the conveying path.

11. The automatic system according to claims 4 and 10, wherein said cutting devices (1, 1b) are configured and arranged to, under the control of the controller, place the respective cutting tools (5) in the transversal gap (G) between conveyors (3a, 3b) and, while both cutting tools (5) are placed in the gap (G), move the cutting tools (5) to simultaneously perform the two primal cuts on the same half carcass (2) of livestock.

12. The automatic system according to any of the previous claims, wherein said at least imaging device (6) is a vision-based device.

13. The automatic system according to claim 11, wherein said vision-based device comprises a camera configured and arranged to provide image data features of the surface of the half carcass (2), a depth camera configured and arranged to provide depth data features of the half carcass (2), and processing and control means configured to generate an imaged half carcass (2) of livestock including a 3D model based on the image and depth data features provided by both cameras.

14. The automatic system according to any of claims 1 to 13, wherein the controller is configured to;
- receive information of a predetermined cut to be performed to the half carcass (2) according to a user's choice,
- calculate X, Y and Z coordinates of a cutting path (B) of the cutting tool (5) on the imaged half carcass (2) of livestock based on said predetermined cut,
- calculate the respective pivoting angles of the cutting tool about the X-axis and/or about the Y-axis and/or about the Z-axis, for said cutting tool (5) to follow the predetermined cutting path (B), and
- control the computer-controlled mechanical arm or robotic arm (13) to perform the predetermined cut according to said calculated X, Y, Z coordinates of the cutting path (B) and to the pivoting angles while the carcass (2) of livestock is moved along the conveyor path.

15. Cutting device (1) for transversal cutting of a half carcass (2) of livestock into one or more primal cuts by means of the automatic system according to any of claims 1 to 14, wherein said cutting device (1a, 1b) is a robot-based device comprising a computer-controlled mechanical arm or a robotic arm (13) carrying a cutting tool (5), and wherein said robot-based device is configured and arranged to, under the control of the controller of the automatic system, angularly move the cutting tool (5) by pivoting it at least about a pivot axis (X, Y, Z), to adopt a plurality of inclined positions with respect to the conveying path.
